# EUROPEAN PATENT SPECIFICATION

(11) **EP 0 368 669 B1**
(45) Date of publication and mention of the grant of the patent: **07.09.1994**
(21) Application number: 89311645.9
(22) Date of filing: 10.11.1989
(51) Int. Cl.: B29C 67/18, B29C 65/70, B29C 67/22, B29C 35/12, B60R 13/07, B60J 10/02

(54) **Method of manufacturing automobile windows**
Verfahren zur Herstellung von Windschutzscheiben
Procédé pour la fabrication de pare-brise

(30) Priority: 10.11.1988 JP 284335/88; 10.11.1988 JP 284336/88
(43) Date of publication of application: 16.05.1990
(73) Proprietor: HASHIMOTO FORMING INDUSTRY CO LTD, Yokohama City Kanagawa Pref. (JP)
(72) Inventor: Tamura, Tatsuya Hashimoto Forming Industry Co Ltd., Yokohama City Kanagawa Pref. (JP); Hotta, Tetsuo Hashimoto Forming Industry Co Ltd., Yokohama City Kanagawa Pref. (JP)
(74) Representative: Senior, Alan Murray

(56) References cited:
- EP-A- 0 325 828
- DE-A- 3 403 518
- DE-A- 3 707 481
- GB-A- 733 623
- US-A- 4 757 659
- PATENT ABSTRACTS OF JAPAN, vol. 12, no. 126 (M-687)[2973], 19th April 1988;& JP-A-62 251 229 (TOKAI KOGYO K.K.) 02-11-1987
- PATENT ABSTRACTS OF JAPAN, vol. 13, no. 122 (M-807)[3470], 27th March 1989;& JP-A-63 297 010 (HASHIMOTO FORMING CO., LTD) 05-12-1988

## Description

The present invention relates to a method of manufacturing automobile windows including a window plate and a frame member provided integrally therewith.

Automobile windows wherein a window plate is integrally provided with a frame member is advantageous in that, since it is not necessary to prepare a window molding member as a separate component from the window plate, the number of components and assembly steps can be reduced to realize an improved productivity in the assembly lines of automobile factories.

There is disclosed, e.g. in Japanese Patent Application Laid-open Publication No. 58-113,480, a method of manufacturing such automobile windows, wherein the peripheral edge of a window plate is placed in the cavity of an injection mold, and the frame member is formed by an injection molding process, i.e. by injecting a thermoplastic synthetic resin material into the mold cavity. This known method suffers from a problem that the window plate tends to be subjected to damages due to a high injection pressure of the resin material.

Another method of manufacturing such windows is disclosed in Japanese Patent Application Laid-open Publication No. 62-251,229, wherein an elongate pre-shaped frame body of a constant cross-section is prepared separately from the window plate, from a thermoplastic synthetic resin material having a relatively high dielectric loss and containing a heat foamable agent therein, such that the foamable agent is maintained in a state in which it has not been substantially foamed. The pre-shaped frame body is secured to and along the peripheral edges of the window plate, is placed in a mold cavity together with the edges of the window plate, and is then applied with a high frequency voltage to cause expansion of the foamable agent within the cavity. Such a method effectively prevents the window plate from damages since the plate is not subjected to a high injection pressure as mentioned above.

On the other hand, window molding members are known, including upper and side segments which are adapted to extend along the upper and side edges of the window plate, respectively, and which are substantially same with and slightly different from each other in cross-section to satisfy both functional and ornamental requirements. More particularly, in case of a front window molding member, the side segments are provided with elongate weirs which prevent rain water on the window plate from flowing across the side segment onto side windows, by guiding the water to flow along the weir without disturbing the driver's sight through side windows, while the upper segment without the weir realizes a flush outer surface along the upper edge of the window plate. Also, the weir may be provided for the upper segment of a rear window molding member, which is then adapted to guide water on the roof panel to flow along the weir sidewards thereby to preserve the driver's sight through the rear window. US-A-4,757,659 discloses examples of window molding members with rain water guides or weirs.

One may thus consider it readily possible to form the weir on a window frame member integrally with the window plate, based on the technology disclosed in the above-mentioned Japanese Patent Application Laid-open Publication No. 62-251,229. As a result of extensive experiments conducted by the inventors, however, it proved to be difficult to manufacture the desired products with a sufficient shape stability, since the heat foamable agent in the resin material has to be subjected to a locally higher degree of expansion at those regions of the pre-shaped frame body which are to be provided with the weirs. The local difference in the expansion degree of the foamable agent results in a local deformation of the frame member and prevents formation of a smooth outer surface of the window frame member with a satisfactory uniformity in the appearance or color.

It is therefore an object of the present invention to provide a novel and improved method which makes it possible to readily manufacture automobile windows including a frame member arranged integrally with the window plate and locally formed with at least one guide portion for guiding the water to flow along the frame member, without accompanying the above-mentioned drawbacks.

According to the present invention, there is provided a method of manufacturing windows for automobiles, each including a window plate and a frame member composed essentially of a thermoplastic synthetic resin material formed into a predetermined shape so as to be integral with the window plate along edges thereof, comprising the steps of:
(A) preparing a window plate of a desired shape;
(B) forming a pre-shaped frame body of constant cross section of a thermoplastic synthetic resin material having a relatively high dielectric loss and containing a heat foamable agent therein, while maintaining the foamable agent in a state in which it is still foamable and expansible;
(C) temporarily securing the pre-shaped frame body onto and along the edge of the window plate;
(D) placing the pre-shaped frame body in a cavity of a mold composed at least partly of a material having a relatively low dielectric loss, together with at least that region of the window plate which is adjacent to the pre-shaped frame body;
(E) subsequently applying a high frequency voltage to that region of the mold which corresponds to the pre-shaped frame body, to heat the pre-shaped frame body and cause the foamable agent to expand within the cavity; and
   characterised by each frame member not being of constant cross section but including at least one guide portion along at least one edge of the window plate, for guiding water to flow along the guide portion, and by said method further comprising
(F) forming said at least one guide portion as an integral part of the frame member by the sub steps of:
   EITHER
(F1) preparing the guide portion separately from the preshaped frame body, prior to said high frequency voltage application step (E); and
   causing the guide portion to adhere with the pre-shaped frame body, during said high frequency voltage application step (E);
   OR
(F2) forming said pre-shaped frame body with a constant cross-section including cross-sectional portion corresponding to said guide portion; and
   removing material from said pre-shaped body at least locally over a predetermined length, corresponding to regions of the frame member without the guide portion, prior to said step (D) of placing the pre-shaped frame body in said mold.

In one preferred embodiment of the method according to the present invention, the guide portion as an integral part of the frame member can be prepared separately from the pre-shaped body, and caused to adhere with the pre-shaped body during the application of the high frequency voltage of the mold.

Alternatively, in another preferred embodiment of the method according to the present invention, the guide portion as an integral part of the frame member can be prepared by forming the pre-shaped frame body to have a longitudinally constant cross-section including cross-sectional portion which corresponds to the guide portion, and by subsequently subjecting the pre-shaped frame body to the removal of material at least locally over a predetermined length corresponding to the regions of the frame member without the guide portion, before the pre-shaped frame body is placed in the mold cavity.

In either case, because the window can be manufactured without subjecting the window plate to a high injection pressure, not only the window plate can be prevented from undesirable tendency of damages, but also the method can be carried out using a mold of less complicated and hence less expensive arrangement. Moreover, the heat foamable agent in the thermoplastic synthetic resin material for the pre-shaped frame body is subjected to a substantially uniform expansion within the entire mold cavity, without accompanying local fluctuation of the expansion degree, so that it is possible to prevent the frame member from undesirable local deformation and to thereby manufacture improved automobile windows with a smooth outer surface and a satisfactory uniformity in the appearance or color.

For a better understanding of the invention, reference is taken to the accompanying drawings, in which:
Fig. 1 is a fragmentary perspective view of an automobile front window manufactured by the method according to the present invention;
Fig. 2 is a fragmentary perspective view of an automobile rear window also manufactured by the method according to the present invention;
Fig. 3 is a perspective view showing the cross-section of the pre-shaped frame body;
Fig. 4a is a fragmentary front view showing the manner of securing the pre-shaped frame body to a window plate;
Fig. 4b and 4c are cross-sectional views taken along the lines A-A and B-B in Fig. 4a, respectively;
Fig. 5 is a fragmentary plan view of the pre-shaped frame body in an enlarged scale;
Fig. 6 is a plan view of the mold;
Figs. 7 and 8 are cross-sectional views taken along the lines C-C and D-D in Fig. 6;
Fig. 9 is a perspective view of a rod-like filling for forming the weir;
Figs. 10 to 12 are cross-sectional views similar to Fig. 7, showing successive stages of the process step using the mold;
Figs. 13a and 13b are perspective views of a pre-shaped frame body to be used in a method according to another embodiment of the present invention;
Fig. 14 is a plan view of the pre-shaped frame body shown in Figs. 13a and 13b; and
Figs. 15a and 15b are sectional views showing different regions of a window manufactured by the method according to still another embodiment of the present invention.

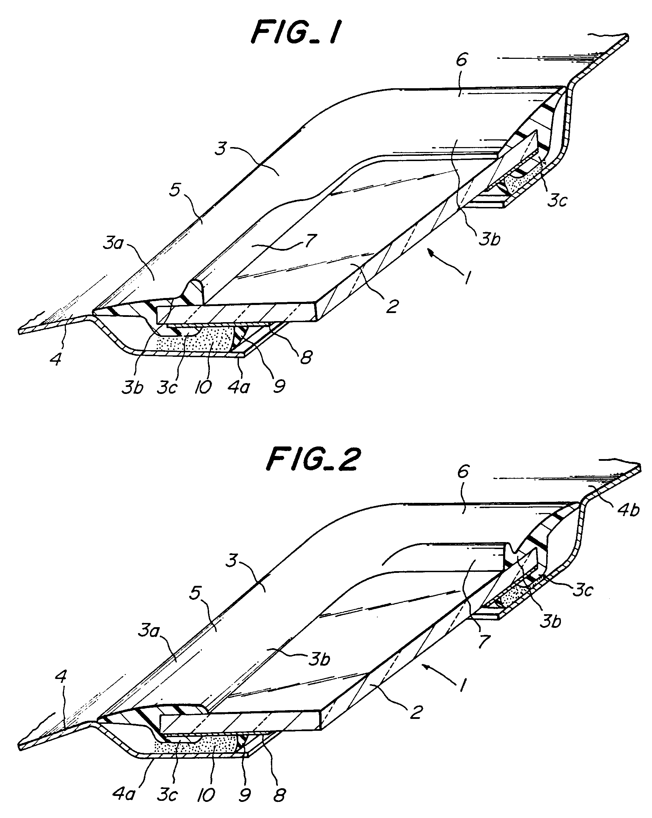

There is shown in Figs. 1 and 2 an automobile window which is designated as a whole by reference numeral 1. The window 1 includes a window plate 2 and a window frame member 3 composed of a thermoplastic synthetic resin material which is integral with the window plate 2 and extends along the edges of the window plate 2. The frame member 3 includes first and second lip sections 3a, 3b on its outer side, as well as a web section 3c on its rear side. The first lip section 3a is adapted to cover a gap between a shoulder portion of an automobile body panel 4 and the edge of the window plate 2, so as to be engageable with the outer surface of the body panel 4. The second lip section 3b and the web section 3c are arranged opposite to each other to accommodate the edge of the window plate 2 therebetween; thus, they are in engagement with the outer and rear surfaces of the window plate 2, respectively.

The window frame member 3 includes side and upper regions 5, 6 extending along the side and upper edges of the window plate 2, respectively. In case of a front window 1 shown in Fig. 1, the side regions 5 of the window frame member 3 are provided with longitudinal ridges 7. On the other hand, in case of an automobile rear window shown in Fig. 2, the ridge 7 is provided on the upper region 6 of the window frame member 3. The window plate 2 has an opaque printed layer 8 along its periphery on its rear surface, and is mounted on a flange 4a of the body panel 4 with an elongate and flexible dam element 9 and an adhesive material 10 therebetween, which are covered by the opaque printed layer 8 so as not to be visible from outside.

In the front window 1 shown in Fig. 1, each ridge 7 on the side region 5 of the frame member 3 serves to guide rain water on the window plate 2 to flow along the ridge and to prevent the water from flowing across the frame member 3, thereby to preserve the driver's sight through a neighbouring side window. Similarly, in case of the rear window 1 shown in Fig. 2, the ridge 7 on the upper region 6 of the frame member 3 is adapted to guide the rain water on the automobile roof panel to flow along the ridge and to prevent the water from flowing across the frame member 3, for preserving the driver's sight through the rear window. Furthermore, the upper region 6 of the frame member 3 in the front window and the side regions 5 of the frame member 3 in the rear window, which are not formed with the ridge 7, makes it readily possible to realize a flush outer surface of the automobile body.

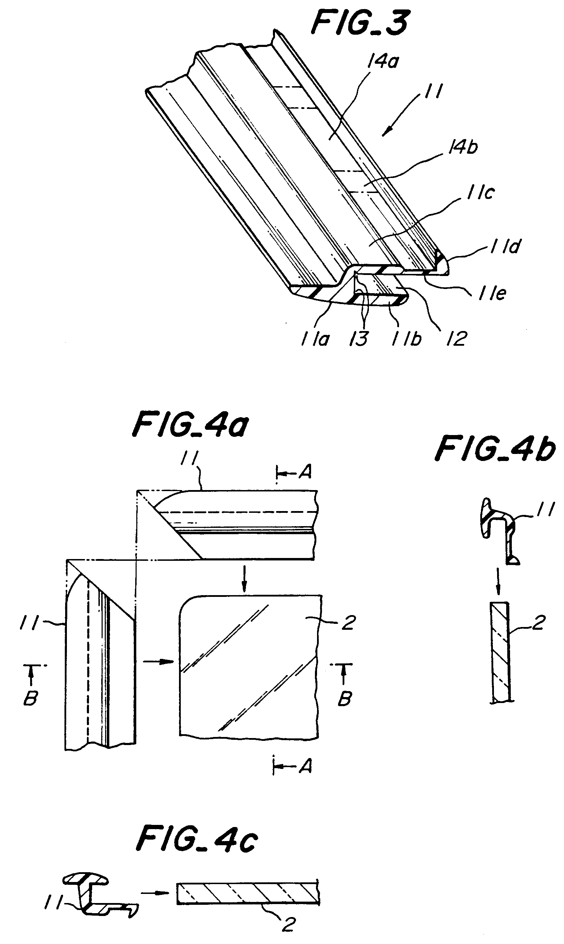

The automobile window shown in Fig. 1 or 2 can be manufactured by a method according to the present invention, of which a first embodiment will be explained below. First of all, as shown in Fig. 3, it is necessary to prepare a window plate 2 and a pre-shaped frame body 11 substantially corresponding to the frame member 3. More particularly, the pre-shaped frame body 3 has a cross-section which is dimensionally somewhat smaller than, but geometrically similar to that of the region of the frame member 3 which is not formed with the ridge 7. The pre-shaped frame body 11 is formed by extruding appropriate thermoplastic synthetic resin material having a relatively high dielectric loss, such as plasticized polyvinylchloride (PVC) resin, which contains a heat foamable agent. The extrusion is carried out under such a predetermined temperature condition that the heat foamable agent in the extruded thermoplastic synthetic resin material is maintained in a substantially unfoamed state or in a medium foamed state in which it has not reached an ultimately desired expansion degree.

The pre-shaped frame body 11 includes first and second lip sections 11a, 11b and a web section 11c which correspond to the first and second lip sections 3a, 3b and the web section 3c of the frame member 3, respectively, as well as an elongate dam section 11d which corresponds to the dam element 9 and is integrally connected to the web section 11c via a strip-like extension 11e. The pre-shaped frame body 11 further includes a groove 12 which is defined between the lip section 11b and the web section 11c. The groove 12 has bottom edges formed with slits 13 and the width of the groove 12, i.e. the distance between the lip section 11b and the web section 11c, is slightly greater than the thickness of the window plate 2, so that the edge of the window plate 2 can be readily inserted into the groove 12 by temporarily deflecting the lip and web sections 11b, 11c about the slits 13 to in cease the width of the groove 12.

Advantageously, layers of a heat activation type synthetic resin material are formed on the inner surfaces of the groove 12 in the pre-shaped frame body 11 synchronously with or after the extrusion thereof, which can be activated when heated above a predetermined temperature, to adhere the pre-shaped frame body 11 with the window plate 2. Alternatively, or additionally, the adhesive material layers may be formed on the front and rear surfaces of the window plate 2. The strip-like extension 11e connecting the dam section 11d with the web section 11c is preferably subjected to local removal of the material along its longitudinal regions 14a to leave a desired number of connection bridges 14b. By this, the adhesive material 10 shown in Figs. 1 and 2 can be brought into direct contact with the rear surface of the window plate 2 through spaces between the neighbouring bridges 14b.

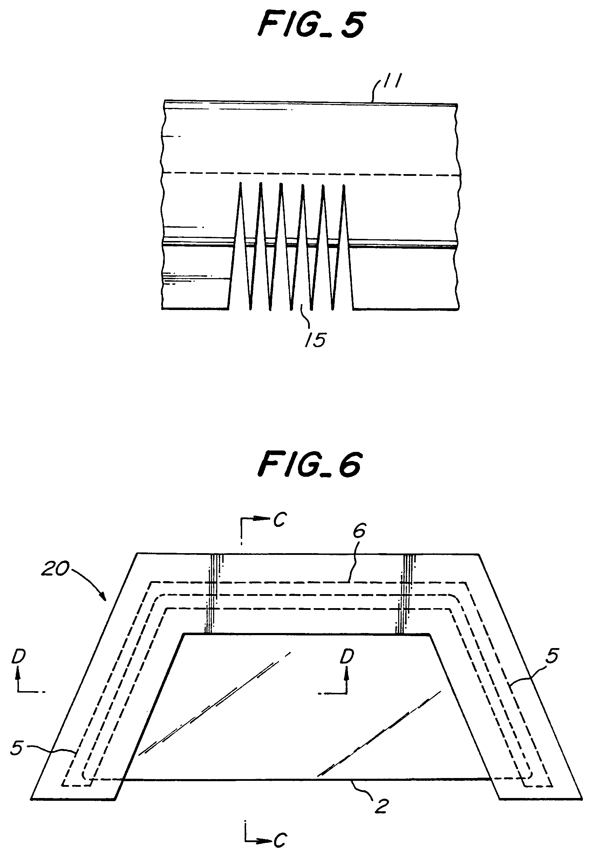

In the next step, as shown in Figs. 4a to 4c, the pre-shaped frame body 11 is temporarily secured to the edge of the window plate 2 by an appropriate mechanical means. To this end, the pre-shaped frame body 11 may be cut into a predetermined length and then secured to the edge of the window plate 2 with the longitudinal ends of the neighbouring pre-shaped frame bodies 11 in abutment with each other. Alternatively, when the periphery of the window plate 2 has corner regions with a substantial radius of curvature, an elongate pre-shaped frame body 11 may be used to continuously cover the upper and side edges of the window plate 2 by bending the pre-shaped frame body 11 into the curvature of the corner regions of the window plate 2 without accompanying an undesirable deformation. When, on the other hand, the periphery of the window plate 2 has corner regions with a relatively small radius of curvature, the elongate pre-shaped frame body 11 may be used to continuously cover the edges of the window plate 2 by forming a series of substantially V-shaped notches 15 (Fig. 5) in those regions of the pre-shaped frame body 11 corresponding to the corner regions of the window plate 2, thereby to facilitate subsequent bending of the pre-shaped frame body 11 into the curvature of the corner regions of the window plate 2.

Thereafter, together with the side and upper edges of the window plate 2, the pre-shaped frame body 11 is brought into the cavity of a mold 20 including upper and lower mold halves 21, 22 and having a configuration corresponding to the peripheral contour of the window plate 2. As shown in Figs. 6 to 8, the upper mold half 21 is provided with an upper electrode 23 which is held in position by means of a holder plate 24. Similarly, the lower mold half 22 is provided with a lower electrode 25 which is held in position by means of a holder plate 26. The two mold halves 21, 22 are tightly engageable with each other along a parting surface 27, to define a mold cavity 28 therebetween. The mold halves 21, 22 are composed of a material with a relatively low dielectric loss, such as silicone resin, polyolefin-based resin or appropriate ceramic material. The electrodes 23, 25 are arranged in the regions of the mold halves 21, 22 corresponding to the frame member 3 on the window plate 2, and shaped to have a width which is greater than the horizontal width of the cavity 28, and spaced from the cavity 28 by as constant distance as possible at any location of the electrodes. The cavity 28 of the mold 20 includes side and upper regions connected with each other, which correspond to the side and upper regions 5, 6 of the window frame member 3, respectively. As for the mold 20 adapted to be used in manufacturing the window shown in Fig. 1, each side region of the cavity 28 is formed with a groove 29 for forming the ridge 7 therein. The upper mold half 21 is further provided with cutter blades 30 which are adapted to form longitudinal slits in the pre-shaped frame body 11 corresponding to the eventual local removal of its material along the longitudinal regions 14a of the strip-like extension 11e, thereby to leave the connection bridges 14b between the web and dam sections 11c, 11d.

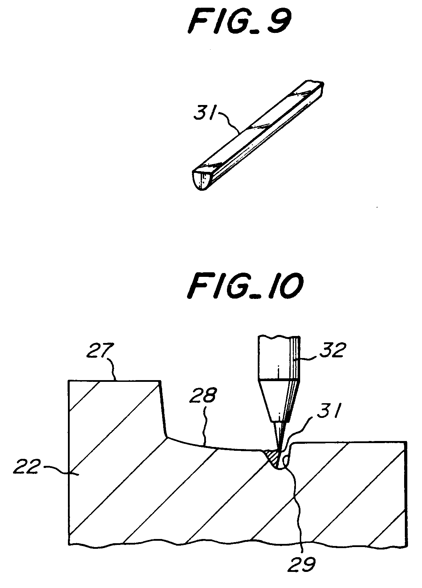

Before bringing the pre-shaped frame body 11 into the cavity 28 of the mold 20, as shown in Fig. 9, a filling 31 corresponding to the ridge 7 is arranged in each groove 29 of the mold cavity 28, which preferably consists of a material containing a foamable agent, like the material of the pre-shaped frame body 11. The filling 31 may be an elongate rod-like body consisting preferably of a thermoplastic synthetic resin material which is same as that of the pre-shaped frame body 11, or which at least exhibits a sufficient compatibility with the latter. When, however, the material of the rod-like body 31 does not exhibit a sufficient compatibility, the rod-like body 31 may be applied with a layer of heat-activation type adhesive material on its surface which is to be opposed to the pre-shaped frame body 11. Also, as shown in Fig. 10, the filling 31 may be in the form of plastic sol or powder discharged from an applicator 32.

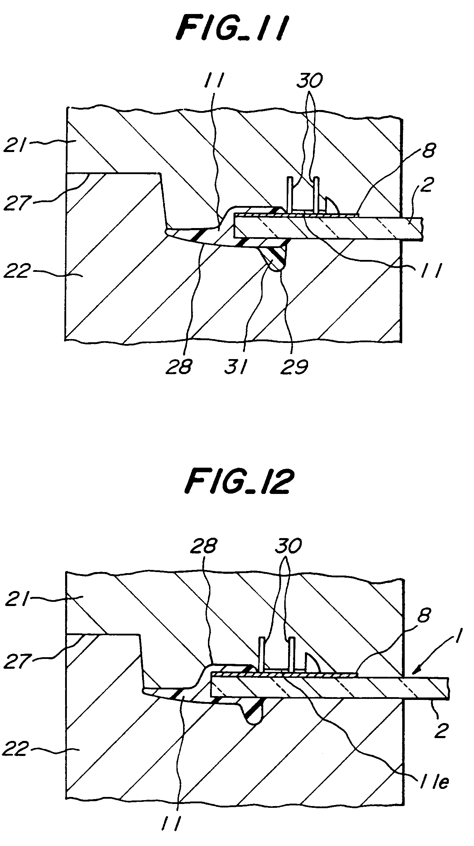

After the filling 31 has been arranged in each groove 29 of the mold cavity 28 and the pre-shaped frame body 11 has subsequently been brought into the cavity 28 together with the relevant edges of the window plate 2, the two mold halves 21, 22 are tightened with each other. The electrodes 23, 25 are then applied with high frequency voltage to heat the pre-shaped frame body 11 of a material with a higher dielectric loss, without significantly heating the mold 20 of a material with a lower dielectric loss, or without accompanying softening of the mold 20 or deformation of the cavity 28. By this, the pre-shaped frame body 11 is heated to a predetermined temperature above the softening temperature of the resin material and the foamable agent contained in the material of the pre-shaped body 11 is caused to evaporate, inducing the expansion of the entire pre-shaped frame body 11 in the cavity 28 so as to completely fill the inner space of the cavity. At the same time, the adhesive material layer between the pre-shaped frame body 11 and the window plate 2 is activated to integrally connect them with each other, to form a window 1 including a frame member 3 which is integral with the window plate 2. Moreover, the pre-shaped frame body 11 heated above the softening temperature of the resin material is caused to adhere with the filling 31, as shown in Fig. 12, to form a frame member 3 with integral ridges 7. When the filling 31 contains a foamable agent, the filling 31 also is caused to expand in the mold cavity 28 to mitigate possible difference in appearance or color between the ridge 7 and the remaining sections of the frame member 3.

After stopping the application of high frequency voltage and subjecting the frame member 3 to cooling and solidification, the mold halves 21, 22 are disengaged from each other to take out the window 1 from the mold 20. A complete automobile front window 1 in its final form shown in Fig. 1 can be obtained after locally removing material from the frame member 3 along the longitudinal slits formed by the blades 30, leaving the connection bridges 14b between the web section 3c and the dam element 9.

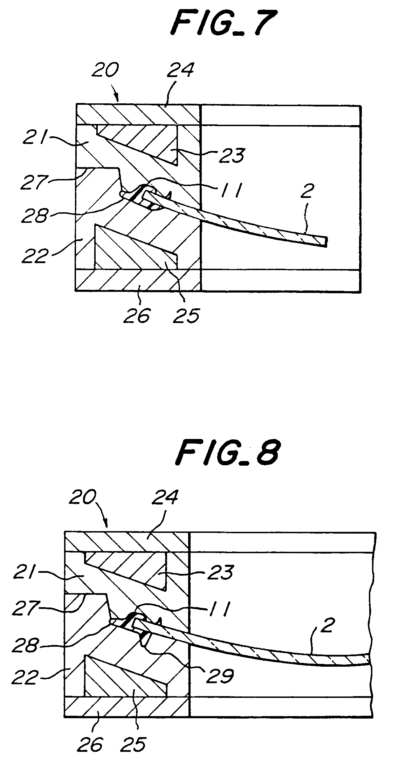

When manufacturing the automobile rear windows shown in Fig. 2, it is of course that the above-mentioned steps are to be carried out in essentially the same manner, using a mold which includes a cavity with side regions of the cross-section shown in Fig. 7 and an upper region of the cross-section shown in Fig. 8.

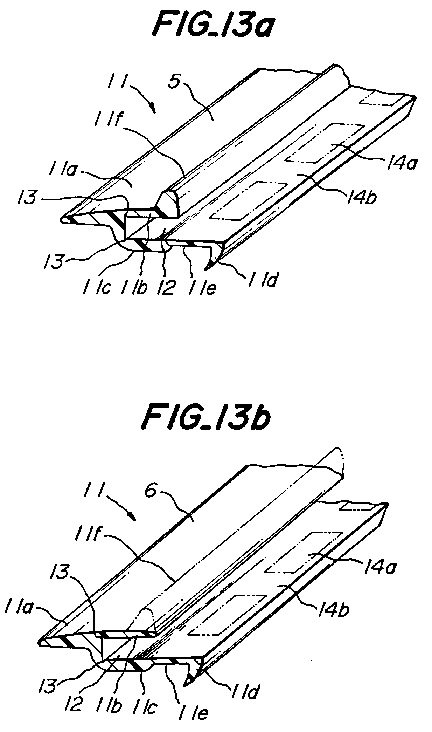

Another embodiment of the method according to the prevent invention for manufacturing the automobile window shown in Fig. 1 or 2 will be explained below. This embodiment differs from the previous one in that, instead of forming the ridges 7 by arranging a filling 31 in each groove 29 of the mold cavity 28 and subsequently causing the filling 31 and the pre-shaped frame body 11 to adhere with each other, the pre-shaped frame body 11 is extruded into an initial, longitudinally constant cross-section as shown in Figs. 13a and 13b, including a continuous section 11f with the cross-section of the ridge 7 on the second lip section 11b.

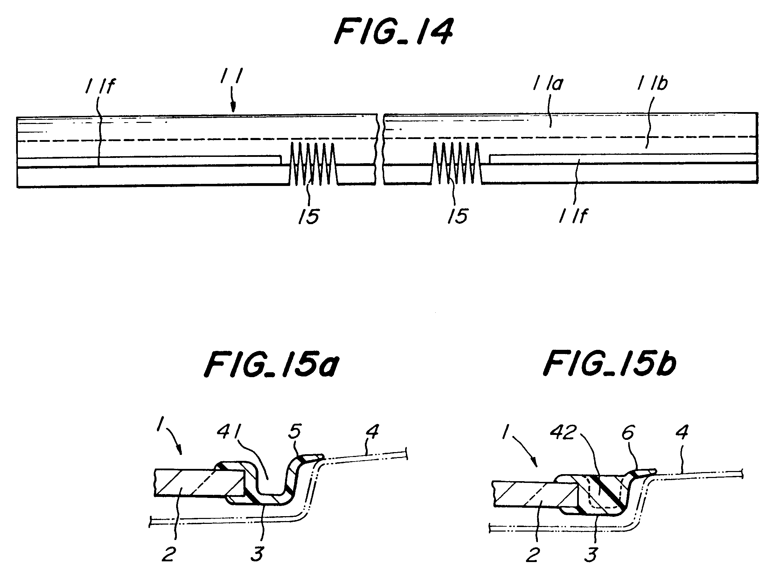

The pre-shaped frame body 11 is thereafter subjected to a local removal of the continuous section 11f. That is, in case of the automobile front window shown in Fig. 1, the continuous section 11f is removed along the region of the frame body 11 corresponding to the upper region 6 of the frame member 3, while leaving the continuous section 11f along the regions of the frame body 11 corresponding to the side regions 5 of the frame member 3. Similarly, in case of the automobile rear window shown in Fig. 2, the continuous section 11f is removed along the regions of the frame body 11 corresponding to the side regions 5 of the frame member 3, while leaving the continuous section 11f along the region of the frame body 11 corresponding to the upper region 6 of the frame member 3. Fig. 14 shows the pre-shaped frame body 11 for an automobile front window, which has been subjected to the local removal of the continuous section 11f and formed with a series of substantially V-shaped notches 15 at regions corresponding to the corner regions of the window plate.

The above-mentioned step of local removal of the continuous section 11f from the pre-shaped frame body 11, and the step of temporarily securing the frame body 11 to the window plate 2 may be carried out either simultaneously, or one after the other. It is of course that, when placing the pre-shaped frame body 11 in the mold cavity together with the relevant edges of the window plate 2, the remaining region of the continuous section 11f corresponding to the ridge 7 is arranged in the groove 29 within the cavity 28, like the filling 31 as shown in Fig. 11.

Except for the above-mentioned differences, the present embodiment is essentially to carry out the process steps as in the previous one.

Still another embodiment of the method according to the present invention for manufacturing the automobile windows will be explained below. The window to be manufactured is illustrated in Figs. 15a and 15b, which differs from that shown in Figs. 1 and 2 in that it includes a channel 41, instead of the ridge 7, as means for guiding the flow of water on the window plate or roof panel. To this end, the pre-shaped frame body is extruded into the original, longitudinally constant cross-section essentially shown in Fig. 15a, including a longitudinal recess corresponding to the channel 41. As shown in Fig. 15b, the recess is locally filled with a synthetic resin material 42 which may contain a foamable agent, along the upper region 6 in case of a front window, or along the side regions 5 in case of the rear window. Alternatively, the pre-shaped frame body may be extruded into the original, longitudinally constant cross-section essentially shown in Fig. 15b, including a relatively thick center section at a location corresponding to the channel 41. The center section may be subjected to the local removal of the material to form the channel along the side regions 5 in case of a front window, or along the upper region 6 in case of the rear window.

It will be appreciated from the foregoing description that, according to the present invention, automobile windows can be manufactured without subjecting the window plate to a high injection pressure, so that the window plate can be prevented from undesirable tendency of damages and the method can be carried out using a mold of less complicated and less expensive arrangement. Moreover, the heat foamable agent in the thermoplastic synthetic resin material for the pre-shaped frame body is subjected to a substantially uniform expansion within the entire mold cavity, without accompanying local fluctuation of the expansion degree, so that it is possible to prevent the frame member from undesirable local deformation and to thereby manufacture improved automobile windows with a smooth outer surface and a satisfactory uniformity in the appearance or color.

While the present invention has been described with reference to certain specific embodiments presented by way of examples only, those skilled in the art will readily appreciate that various modifications and/or alterations may be made without departing from the scope of the invention. For example, the guide portions in the form of a ridge or channel, which are arranged close to the window plate in the above-mentioned embodiments, may be formed at a location which is somewhat remote from the window plate and in the vicinity of the automobile body panel.

## Claims

1. A method of manufacturing windows for automobiles, each including a window plate (2) and a frame member (3) composed essentially of a thermoplastic synthetic resin material formed into a predetermined shape so as to be integral with the window plate (2) along edges thereof, comprising the steps of:
(A) preparing a window plate (2) of a desired shape;
(B) forming a pre-shaped frame body (11) of constant cross section of a thermoplastic synthetic resin material having a relatively high dielectric loss and containing a heat foamable agent therein, while maintaining the foamable agent in a state in which it is still foamable and expansible;
(C) temporarily securing the pre-shaped frame body (11) onto and along the edge of the window plate (2);
(D) placing the pre-shaped frame body (11) in a cavity (28) of a mold (20) composed at least partly of a material having a relatively low dielectric loss, together with at least that region of the window plate (2) which is adjacent to the pre-shaped frame body (11);
(E) subsequently applying a high frequency voltage to that region of the mold (20) which corresponds to the preshaped frame body (11), to heat the pre-shaped frame body (11) and cause the foamable agent to expand within the cavity (28); and
characterised by each frame member (3) not being of constant cross section but including at least one guide portion (7) along at least one edge of the window plate (2), for guiding water to flow along the guide portion (7), and by said method further comprising
(F) forming said at least one guide portion (7) as an integral part of the frame member by the sub steps of:
EITHER
(F1) preparing the guide portion (7, 31) separately from the pre-shaped frame body, prior to said high frequency voltage application step (E); and
causing the guide portion (7) to adhere with the pre-shaped frame body (3), during said high frequency voltage application step (E);
OR
(F2) forming said pre-shaped frame body (3) with a constant cross-section including cross-sectional portion corresponding to said guide portion (7); and
removing material from said pre-shaped body (3) at least locally over a predetermined length, corresponding to regions of the frame member without the guide portion, prior to said step (D) of placing the pre-shaped frame body (3) in said mold (20).

2. The method as claimed in claim 1, wherein the preshaped frame body (3) is temporarily secured onto and along the edge of the window plate (2), with a heat activation type adhesive material layer therebetween.

3. The method as claimed in claim 2, wherein said heat-activation type adhesive material layer is provided on said pre-shaped frame body (3), during or after formation thereof in said step (B).

4. The method as claimed in claim 2, wherein said heat-activation type adhesive material layer is provided on said window plate (2).

5. The method as claimed in any one of claims 1 to 4 wherein said thermoplastic synthetic resin material forming said pre-shaped frame body (3) comprises a plasticized polyvinyl-chloride resin.

6. The method as claimed in any one of claims 1 to 5, wherein said pre-shaped frame body (3) is formed in said step (B) by an extrusion molding process.

## Patentansprüche

1. Verfahren zur Herstellung von Fenstern für Kraftfahrzeuge, wobei jedes Fenster eine Fensterscheibe (2) und ein Rahmenelement (3) enthält, das im wesentlichen aus thermoplastischem Synthetikharzmaterial besteht, das in eine vorgegebene Form geformt ist, um so mit der Fensterscheibe (2) längs der Kanten derselben zu einer Einheit verbunden zu werden, mit den Schritten:
(A) Vorbereiten einer Fensterscheibe (2) mit einer gewünschten Form;
(B) Ausbilden eines vorgeformten Rahmenkörpers (11) mit konstantem Querschnitt aus einem thermoplastischen Synthetikharzmaterial, das einen verhältnismäßig hohen dielektrischen Verlust besitzt und ein durch Wärme schäumbares Mittel enthält, wobei das schäumbare Mittel in einem Zustand gehalten wird, in dem es schäumbar und ausdehnbar bleibt;
(C) vorläufiges Befestigen des vorgeformten Rahmenkörpers (11) an und längs der Kante der Fensterscheibe (2);
(D) Anordnen des vorgeformten Rahmenkörpers (11) zusammen mit wenigstens dem an den vorgeformten Rahmenkörper (11) angrenzenden Bereich der Fensterscheibe (2) in einem Hohlraum (28) einer Gießform (20), die wenigstens teilweise aus einem Material mit verhältnismäßig niedrigem dielektrischen Verlust besteht,;
(E) anschließend Anlegen einer hochfrequenten Spannung an denjenigen Bereich der Gießform (20), der dem vorgeformten Rahmenkörper (11) entspricht, um den vorgeformten Rahmenkörper (11) zu erwärmen und eine Ausdehnung des schäumbaren Mittels innerhalb des Hohlraums (28) zu bewirken; und
dadurch gekennzeichnet, daß jedes Rahmenelement (3) keinen konstanten Querschnitt besitzt, sondern wenigstens einen Führungsabschnitt (7) wenigstens längs einer Kante der Fensterscheibe (2) enthält, um Wasser längs des Führungsabschnitts (7) zu leiten, und dadurch, daß das Verfahren ferner enthält:
(F) Ausbilden des wenigstens einen Führungsabschnitts (7) als integralen Bestandteil des Rahmenelements durch die Unterschritte:
ENTWEDER
(F1) Vorbereiten des Führungsabschnitts (7, 31) getrennt vom vorgeformten Rahmenkörper vor dem Schritt (E) des Anlegens der hochfrequenten Spannung; und
Veranlassen, daß der Führungsabschnitt (7) während des Schrittes (E) des Anlegens der hochfrequenten Spannung am vorgeformten Rahmenkörper (3) anhaftet;
ODER
(F2) Ausbilden des vorgeformten Rahmenkörpers (3) mit konstantem Querschnitt, der einen Querschnittsabschnitt enthält, der dem Führungsabschnitt (7) entspricht; und
Entfernen von Material vom vorgeformten Körper (3) wenigstens lokal über einer vorgegebenen Länge, die den Bereichen des Rahmenelements ohne Führungsabschnitt entspricht, vor dem Schritt (D) des Anordnens des vorgeformten Rahmenkörpers (3) in der Gießform (20).

2. Verfahren gemäß Anspruch 1, bei dem der vorgeformte Rahmenkörper (3) vorläufig an und längs der Kante der Fensterscheibe (2) befestigt wird, wobei dazwischen eine Haftmaterialschicht vom wärmeaktivierbaren Typ eingebracht wird.

3. Verfahren gemäß Anspruch 2, bei dem die Haftmaterialschicht des wärmeaktivierbaren Typs auf dem vorgeformten Körper (3) während oder nach der Ausbildung desselben im Schritt (B) vorgesehen ist.

4. Verfahren gemäß Anspruch 2, bei dem die Haftmaterialschicht des wärmeaktivierbaren Typs auf der Fensterscheibe (2) vorgesehen ist.

5. Verfahren gemäß einem der Ansprüche 1 bis 4, bei dem das den vorgeformten Rahmenkörper (3) bildende thermoplastische Synthetikharzmaterial ein plastisches Polyvinylchlorid-Harz umfaßt.

6. Verfahren gemäß einem der Ansprüche 1 bis 5, bei dem der vorgeformte Rahmenkörper (3) im Schritt (B) durch einen Strangpreßprozeß gebildet wird.

## Revendications

1. Procédé pour la fabrication de pare-brise pour automobiles, chacun comportant une plaque de pare-brise (2) et un élément formant cadre (3) composé essentiellement d'un matériau en résine synthétique thermoplastique formé en une forme prédéterminée, de façon à faire corps avec la plaque de pare-brise (2) le long des bords de celle-ci, comprenant les étapes suivantes consistant à :
- (A) préparer une plaque de pare-brise (2) d'une forme désirée;
- (B) former un corps (11) de cadre pré-formé de section transversale constante, d'un matériau en résine synthétique thermoplastique ayant une perte diélectrique relativement élevée et contenant en son intérieur un agent pouvant mousser par la chaleur, tout en maintenant l'agent pouvant mousser en un état dans lequel il peut encore mousser et être expansible;
- (C) fixer temporairement le corps (11) de cadre pré-formé sur et le long du bord de la plaque de pare-brise (2);
- (D) placer le corps (11) de cadre pré-formé dans une cavité (28) d'un moule (20) composé au moins partiellement d'un matériau ayant une perte diélectrique relativement basse, avec au moins la région de la plaque de pare-brise (2) qui est adjacente au corps (11) de cadre pré-formé;
- (E) appliquer ensuite une tension à haute fréquence à la région du moule (20) qui correspond au corps (11) de cadre pré-formé, pour chauffer le corps (11) de cadre pré-formé et amener l'agent pouvant mousser a s'étendre à l'intérieur de la cavité (28); et
- caractérisé en ce que chaque élément (3) de cadre n'est pas de section transversale constante, mais comporte au moins une partie (7) de guidage le long d'au moins un bord de la plaque de pare-brise (2), pour guider l'eau afin qu'elle coule le long de la partie (7) de guidage, et en ce que ledit procédé comprend de plus l'étape consistant à :
- (F) former ladite au moins une partie (7) de guidage, formant partie intégrante de l'élément de cadre, par les sous-étapes suivantes:
OU BIEN:
- (F1) préparer la partie (7, 31) de guidage séparément du corps de cadre pré-formé, avant ladite étape (E) de l'application de la tension à haute fréquence; et
- amener la partie (7) de guidage à adhérer avec le corps (3) de cadre pré-formé, pendant ladite étape (E) d'application de la tension à haute fréquence;
OU BIEN:
- (F2) former ledit corps (3) de cadre pré-formé avec une sectiion transversale constante comportant la partie de section transversale correspondant à ladite partie (7) de guidage; et
- enlever du matériau en provenance dudit corps pré-formé (3), au moins localement sur une longueur prédéterminée correspondant aux régions de l'élément formant cadre sans la partie de guidage, avant ladite étape (D) de placement du corps (3) de cadre pré-formé dans ledit moule (20).

2. Procédé selon la revendication 1, dans lequel le corps (3) de cadre pre-formé est fixé temporairement sur et le long du bord de la plaque de pare-brise (2), avec, entre les deux, une couche de matériau adhésif du type à activation par la chaleur.

3. Procédé selon la revendication 2, dans lequel ladite couche de matériau adhésif du type à activation par la chaleur est prévue sur ledit corps (3) de cadre pré-formé, pendant ou après la formation de celui-ci dans ladite étape (B).

4. Procédé selon la revendication 2, dans lequel ladite couche de matériau adhésif du type à activation par la chaleur est prévue sur ladite plaque de pare-brise (2).

5. Procédé selon l'une quelconque des revendications 1 à 4, dans lequel le matériau en résine synthétique thermoplastique formant ledit corps (3) de cadre pré-formé comprend une résine plastifiée de chlorure de polyvinyle.

6. Procédé selon l'une quelconque des revendications 1 à 5, dans lequel ledit corps (3) de cadre pré-formé est formé dans ladite étape (B) par un procédé de moulage par extrusion.
